# EUROPÄISCHE PATENTSCHRIFT

(11) **EP 1 169 155 B1**
(45) Veröffentlichungstag und Bekanntmachung des Hinweises auf die Patenterteilung: **26.11.2003**
(21) Anmeldenummer: 00918842.6
(22) Anmeldetag: 31.03.2000
(51) Int. Cl.: B23K 11/24, B23K 11/25

(54) **VERFAHREN UND VORRICHTUNG ZUM WIDERSTANDSSCHWEISSEN**
RESISTANCE WELDING METHOD AND DEVICE
PROCEDE DE SOUDAGE ELECTRIQUE PAR RESISTANCE, NOTAMMENT DE TOLES D'ALUMINIUM

(30) Priorität: 01.04.1999 DE 19915121; 20.05.1999 DE 19923172
(43) Veröffentlichungstag der Anmeldung: 09.01.2002
(73) Patentinhaber: Karakas, Erdogan, 30938 Burgwedel (DE)
(72) Erfinder: Karakas, Erdogan, 30938 Burgwedel (DE)
(74) Vertreter: Wagner, Carsten
(86) Internationale Anmeldenummer: EP0002840
(87) Internationale Veröffentlichungsnummer: WO00059672

(56) Entgegenhaltungen:
- EP-A- 0 688 626
- EP-A- 0 756 915
- US-A- 4 973 815
- US-A- 5 237 147

## Beschreibung

Die Erfindung betrifft ein Verfahren der im Oberbegriff des Anspruchs 1 genannten Art sowie eine Vorrichtung der im Oberbegriff des Anspruchs 11 genannten Art zum Widerstandsschweißen (Siehe EP-A-835 713).

Beim Widerstandsschweißen mit Gleichstrom werden die Schweißelektroden ungleichmäßig erwärmt, wobei die Schweißelektrode mit der positiven Polarität wärmer wird als die Schweißelektrode mit der negativen Polarität. Dies ist auf Peltier-Wärme und Joulschewärme zurückzuführen. Eine einseitige Erwärmung der positiv gepolten Schweißelektrode verursacht eine Minderung der Standzeit bzw. Standmenge dieser Elektrode sowie eine Verschiebung der Lage einer beim Schweißen gebildeten Schweißlinse aus der gewünschten Mittellage in Richtung auf die wärmere, positiv gepolte Elektrode. Dies trifft insbesondere für Materialien mit höherer Wärmeleitfähigkeit, beispielsweise Aluminium, zu.

Zur Vermeidung dieser Nachteile ist es bekannt, Wechselstrom zum Schweißen einzusetzen.

Ein Verfahren und eine Vorrichtung zum Widerstandsschweißen mit Wechselstrom ist durch die DE 41 13 117 C1 bekannt. Bei diesem Verfahren werden auf der primären Seite eines Schweißtransformators zuerst eine Folge positiver Mittelfrequenz-Stromimpulse und anschließend eine Folge negativer Stromimpulse erzeugt und den an die Sekundärwicklung des Transformators angeschlossenen Schweißelektroden zugeführt. Man erhält auf diese Weise einen Wechselstrom. Ein Nachteil des bekannten Verfahrens besteht darin, daß der Schweißtransformator nicht nur die Mittelfrequenz-Stromimpulse, sondern auch den resultierenden Strom mit niedriger Frequenz übertragen muß, da der Schweiß-Wechselstrom auf der primären Seite des Transformators gewonnen wird. Der hierfür erforderliche Schweißtransformator ist groß und schwer sowie teuer in der Herstellung. Darüber hinaus kann der Schweiß-Wechselstrom bei der bekannten Vorrichtung keine rechteckige Kurvenform annehmen, da das Übertragungsverhalten des Schweißtransformators eine solche Kurvenform nicht zuläßt.

Ähnliche Vorrichtungen sind durch DE 30 05 083 C2 und EP 0 261 328 A1 bekannt.

Ferner ist durch DE 295 08 868 U1 eine Vorrichtung zum Elektroschweißen bekannt.

Durch DE 44 40 351 C1 ist ein Verfahren der im Oberbegriff des Anspruchs 1 bekannten Art zum Widerstandsschweißen bekannt, bei dem zur Erzeugung eines Schweiß-Wechselstromes eine an den Schweiß-Elektroden anliegende Gleichspannung während des Schweißvorganges umgepolt wird. Nach den Angaben in der Druckschrift soll hierdurch vermieden werden, daß sich die Schweißlinse zu der wärmeren, positiven Elektrode hin verschoben bildet und damit zu einer Kontaktebene, in der die zu verschweißenden Werkstücke aneinander anliegen, unsymmetrisch ist, was die Festigkeit der Schweißverbindung beeinträchtigt. Es hat sich herausgestellt, daß durch das aus der Druckschrift bekannte Verfahren die Bildung von Schweißlinsen, die zu der Kontaktebene zwischen den zu verschweißenden Werkstücken unsymmetrisch sind, nicht zuverlässig vermieden ist.

Verfahren zum Widerstandsschweißen sind ferner durch EP-A-0 688 626, US-A-5 237 147, US-A-4 973 815, EP-A-0 835 713 und EP-A-0 756 915 bekannt.

Der Erfindung liegt die Aufgabe zugrunde, ein Verfahren der im Oberbegriff des Anspruchs 1 genannten Art und eine Vorrichtung der im Oberbegriff des Anspruchs 11 genannten Art anzugeben, das bzw. die den Nachteil des bekannten Verfahrens bzw. der bekannten Vorrichtung nicht aufweist, bei dem bzw. bei der also die Gefahr, daß sich eine zu der Kontaktebene zwischen den zu verschweißenden Werkstücken unsymmetrische Schweißlinse bildet, verringert ist.

Diese Aufgabe wird im Hinblick auf das Verfahren durch die Lehre des Anspruchs 1 und im Hinblick auf die Vorrichtung durch die Lehre des Anspruchs 11 gelöst.

Bei dem erfindungsgemäßen Verfahren wird während des Schweißvorganges, also während der Bildung einer Schweißlinse oder einer Schweißnaht, wenigstens ein Parameter des Schweißprozesses gemessen. Erfindungsgemäß erfolgt dann die Umpolung der Gleichspannung während des Schweißvorganges in Abhängigkeit von dem gemessenen Parameter oder wenigstens einem der gemessenen Parameter. Der gemessene Parameter kann beispielsweise die Temperatur der Schweißelektroden sein, die nachfolgend kurz als Elektroden bezeichnet werden. Ergibt die Messung der Temperatur beispielsweise, daß sich die positiv gepolte Elektrode stärker erwärmt hat, so werden die Elektroden umgepolt. Daraufhin erwärmt sich die zunächst negativ gepolte und damit kältere Elektrode stärker als die nunmehr negativ gepolte andere Elektrode, bis der Temperaturunterschied ausgeglichen ist. Falls sich daraufhin die nunmehr positiv gepolte Elektrode stärker erwärmt, so wird die Umpolung wiederholt. Auf diese Weise läßt sich ein Temperaturunterschied zwischen den Schweißelektroden nahezu vollständig vermeiden, falls die Bildung einer zur Kontaktebene zwischen den zu verschweißenden Werkstücken symmetrischen Schweißlinse erwünscht ist. Falls die Bildung einer zur Kontaktebene unsymmetrischen Schweißlinse gewünscht ist, so läßt sich dies mit dem erfindungsgemäßen Verfahren durch Steuerung der Temperatur der Schweißelektroden durch Steuerung der Umpolung in beliebiger Weise erreichen.

Ferner ermöglicht es die erfindungsgemäße Lehre, eine gleichmäßige Abnutzung der Elektroden herbeizuführen und damit ihre Standzeit bzw. Standmenge zu erhöhen. Dies verhindert vorzeitigen Verschleiß und verringert Rüstzeiten, die beim Austausch der Elektroden entstehen. Auf diese Weise ist der Schweißprozess kostengünstiger gestaltet.

Das erfindungsgemäße Verfahren und die erfindungsgemäße Vorrichtung sind sowohl zum Punkt- als auch zum Nahtschweißen und besonders gut zum Schweißen von Aluminium geeignet.

Eine Weiterbildung der erfindungsgemäßen Lehre sieht vor, daß zur Beeinflussung der Bildung einer Schweißlinse an der Kontaktebene zwischen den zu verschweißenden Werkstücken und/oder zur Beeinflussung der Standzeit bzw. Standmenge der Elektroden wenigstens eine Kenngröße des Schweiß-Wechselstromes in Abhängigkeit von wenigstens einem während des Schweißvorganges gemessenen Parameter des Schweißprozesses während des Schweißvorganges beeinflußt wird. Auf diese Weise ist eine Anpassung des erfindungsgemäßen Verfahrens beispielsweise an unterschiedliche zu verschweißende Werkstücke ermöglicht und die Flexibilität des erfindungsgemäßen Verfahrens erhöht.

Eine Weiterbildung der vorgenannten Ausführungsform sieht vor, daß die Kenngrößen des Schweißwechselstromes wenigstens
- das Verhältnis der Zeitdauer einer positiven Halbwelle zu der Zeitdauer einer negativen Halbwelle des Schweiß-Wechselstromes (Balance) und/oder
- einen zeitlichen Abstand zwischen einer positiven Halbwelle und einer negativen Halbwelle des Schweiß-Wechselstromes (Totzeit) und/oder
- die Kurvenform der positiven Halbwelle und/oder die Kurvenform der negativen Halbwelle des Schweiß-Wechselstromes und/oder
- die Amplitude der positiven Halbwelle und/oder die Amplitude der negativen Halbwelle des Schweiß-Wechselstromes und/oder
- das Tastverhältnis des Schweiß-Wechselstromes
umfassen. Durch entsprechende Wahl einer oder mehrerer dieser Kenngrößen ist der Schweißvorgang innerhalb weiter Grenzen in der gewünschten Weise beeinflußbar. Die Kenngrößen können hierbei getrennt voneinander oder wenigstens teilweise im Zusammenhang miteinander eingestellt und/oder während des Schweißprozesses beeinflußt werden. Die Kenngrößen können also während des Schweißprozesses entweder im wesentlichen konstant gehalten oder verändert werden.

Als Grundlage für die Beeinflussung der Kenngrößen können grundsätzlich beliebige Parameter des Schweißprozesses herangezogen werden. Gemäß einer Weiterbildung umfassen die Parameter des Schweißprozesses wenigstens
- die Temperatur der Schweißelektroden und/oder
- die Dicke und/oder das Material der zu verschweißenden Werkstücke und/oder
- die Kraft, mit der die Schweißelektroden die zu verschweißenden Werkstücke kontaktieren, und/oder
- den Abnutzungsgrad der Schweißelektroden und/oder
- einen zu Beginn des Schweißprozesses zwischen den Schweißelektroden bestehenden elektrischen Widerstand der zu verschweissenden Werkstücke, und oder
- die Gesamtdauer der Schweißzeit, während der seit einer vorangegangenen Umpolung der Gleichspannung mit unveränderter Polarität der Schweißelektroden geschweißt worden ist, und/oder
- die Anzahl der Schweißverbindungen, insbesondere Schweißpunkte oder Schweißnähte, die seit einer vorangegangenen Umpolung der Gleichspannung unveränderter Polarität erzeugt worden sind, und/oder
- das Verhältnis der Zeitdauer, während der eine Elektrode bei der Erzeugung einer Mehrzahl von Schweißverbindungen positiv gepolt war, zu der Zeitdauer, während der die Elektrode bei der Erzeugung der Mehrzahl von Schweißverbindungen negativ gepolt war.

Diese Parameter stellen eine zuverlässige Grundlage für die Beeinflussung der Kenngrößen des Schweiß-Wechselstromes dar. Falls erforderlich können jedoch noch weitere Parameter des Schweißprozesses herangezogen werden.

Gemäß einer Ausführungsform wird die Gleichspannung während des Schweißprozesses wenigstens zweimal umgepolt.

Eine besonders vorteilhafte Weiterbildung sieht vor, daß während des Schweißprozesses wenigstens ein Parameter des Schweißprozesses gemessen wird und daß in Abhängigkeit von dem gemessenen Parameter oder den gemessenen Parametern wenigstens eine Kenngröße des Schweiß-Wechselstromes gesteuert oder geregelt wird. Bei dieser Ausführungsform werden die Parameter des Schweißprozesses online während des Schweißprozesses gemessen, so daß eine Beeinflussung der Kenngrößen des Schweiß-Wechselstromes in Abhängigkeit von Veränderungen der Parameter ermöglicht ist. Auf diese Weise ist eine noch genauere Steuerung der Lage der Schweißlinse relativ zu der Kontaktebene bzw. eine noch genauere Steuerung der Abnutzung der Elektroden ermöglicht und die Qualität der Schweißverbindung verbessert.

Grundsätzlich ist mit dem erfindungsgemäßen Verfahren möglich, die Schweißlinse relativ zu der Kontaktebene zwischen den zu verschweißenden Werkstücken in beliebiger Weise zu positionieren. Zweckmäßigerweise werden die Kenngrößen des Schweiß-Wechselstromes jedoch in Abhängigkeit von wenigstens einem Parameter des Schweißprozesses derart eingestellt oder gesteuert bzw. geregelt, daß sich an der Kontaktebene zwischen den zu verschweißenden Werkstücken eine Schweißlinse bildet, die wenigstens zu dieser Kontaktebene im wesentlichen symmetrisch ist. Auf diese Weise weist die Schweißverbindung eine besonders hohe Qualität auf.

Eine andere Weiterbildung des erfindungsgemäßen Verfahrens sieht vor, daß die Anzahl der Umpolungen und/oder die Kenngrößen des Schweiß-Wechselstromes derart gesteuert wird bzw. werden, daß während einer Mehrzahl von Schweißvorgängen oder während eines vorbestimmten Zeitintervalles die Summe der Schweißzeiten, während der eine Schweißelektrode positiv gepolt ist, im wesentlichen gleich der Summe der Schweißzeiten ist, während der die Schweißelektrode negativ gepolt ist. Bei dieser Ausführungsform werden die Schweißelektroden gleichermaßen mit positiver Polarität wie mit negativer Polarität "belastet", so daß eine unterschiedlich starke Erwärmung der Schweißelektroden besonders zuverlässig vermieden ist.

Der Abnutzungsgrad der Schweißelektroden kann auf beliebige geeignete Weise ermittelt werden. Eine vorteilhafte Weiterbildung sieht vor, daß der Abnutzungsgrad der Schweißelektroden und/oder die Form der Schweißelektroden durch optische Mittel ermittelt wird.

Die Messung der Temperatur der Schweißelektroden kann auf beliebige geeignete Weise erfolgen. Eine vorteilhafte Weiterbildung sieht vor, daß die Temperatur der Schweißelektroden berührungslos gemessen wird, insbesondere mit Mitteln zur Messung von Infrarotstrahlung, beispielsweise einer Infrarotkamera.

Die erfindungsgemäße Vorrichtung weist Meßmittel, die während des Schweißvorganges wenigstens einen Parameter des Schweißprozesses messen, sowie Steuermittel auf, die mit den Meßmitteln verbunden sind und die Wechselrichtermittel in Abhängigkeit von dem gemessenen Parameter oder wenigstens einem der gemessenen Parameter ansteuern, derart, daß die Umpolung der Gleichspannung während des Schweißvorganges in Abhängigkeit von dem gemessenen Parameter oder wenigstens einem der gemessenen Parameter erfolgt. Bei der erfindungsgemäßen Vorrichtung erfolgt die Umpolung der Gleichspannung somit in Abhängigkeit von dem gemessenen Parameter oder den gemessenen Parametern.

Eine Weiterbildung der erfindungsgemäßen Vorrichtung sieht vor, daß die Spannungserzeugungsmittel
- Gleichrichtermittel zur Gleichrichtung einer Wechselspannung,
- Zerhackermittel, die den Gleichrichtermitteln nachgeordnet sind und die gleichgerichtete Wechselspannung in Impulse zerhakken, und
- einen Schweißtransformator, der den Zerhakkermitteln nachgeordnet ist und dem Schweißtransformator nachgeordnete Gleichrichtermittel zur Erzeugung einer an die Schweißelektroden anlegbaren Gleichspannung,
aufweisen. Diese Vorrichtung ist einfach im Aufbau und damit kostengünstig sowie zuverlässig im Betrieb.

Eine besonders vorteilhafte Weiterbildung der erfindungsgemäßen Vorrichtung sieht vor, daß die Wechselrichtermittel mit den Schweißelektroden und über einen Gleichrichter mit der Sekundärwicklung des Schweißtransformators verbunden sind. Da somit der Schweiß-Wechselstrom auf der Sekundärseite des Schweiß-Transformators erzeugt wird, kann ein Schweiß-Transformator mit verhältnismäßig geringem Gewicht und Volumen verwendet werden, da die dann auftretenden Frequenzen des von dem Schweißtransformator zu übertragenden Stromes im KHz-Bereich liegen. Auf diese Weise sind große und schwere Schweiß-Transformatoren nicht erforderlich. Dies ermöglicht den Einsatz der erfindungsgemäßen Vorrichtung bei Schweißrobotern.

Eine andere Weiterbildung der erfindungsgemäßen Vorrichtung sieht vor, daß die Wechselrichtermittel Schalter mit wenigstens zwei Schaltern aufweisen, die durch die Steuermittel ansteuerbar sind. Die Schalter können hierbei in beliebiger geeigneter Weise ausgebildet sein, beispielsweise als Transistoren, Thystoren oder dergleichen. Hinsichtlich der Ausbildung der Schaltermittel wird auf DE 295 08 868 U 1 verwiesen, die verschiedene für die erfindungsgemäße Vorrichtung geeignete Schaltermittel zeigt und auf die hiermit Bezug genommen wird.

Es ist jedoch auch möglich, anstelle der Messung oder zusätzlich zu dieser Parameter des Schweißprozesses in die erfindungsgemäße Vorrichtung einzugeben. Hierzu sieht eine im Anspruch 19 angegebene Weiterbildung eine mit den Steuermitteln verbundene Eingabeeinrichtung zur externen Eingabe wenigstens eines Parameters des Schweißprozesses vor. Auf diese Weise ist der Schweißprozess manuell beeinflußbar.

Andere vorteilhafte und zweckmäßige Weiterbildungen der erfindungsgemäßen Vorrichtung sind in den weiteren Unteransprüchen 15 bis 18 angegeben.

Die Erfindung wird nachfolgend anhand der beigefügten Zeichnung näher erläutert, in der ein Ausführungsbeispiel dargestellt ist.

Es zeigt:
- Fig. 1: ein schematisches Blockschaltbild eines Ausführungsbeispieles einer erfindungsgemäßen Vorrichtung zur Durchführung des erfindungsgemäßen Verfahrens,
- Fig. 2: ein Zeitdiagramm von Kurvenformen eines Schweiß-Wechselstromes und
- Fig. 3: in gleicher Darstellung wie Fig. 2 eine weitere Kurvenform eines Schweiß-Wechselstromes.

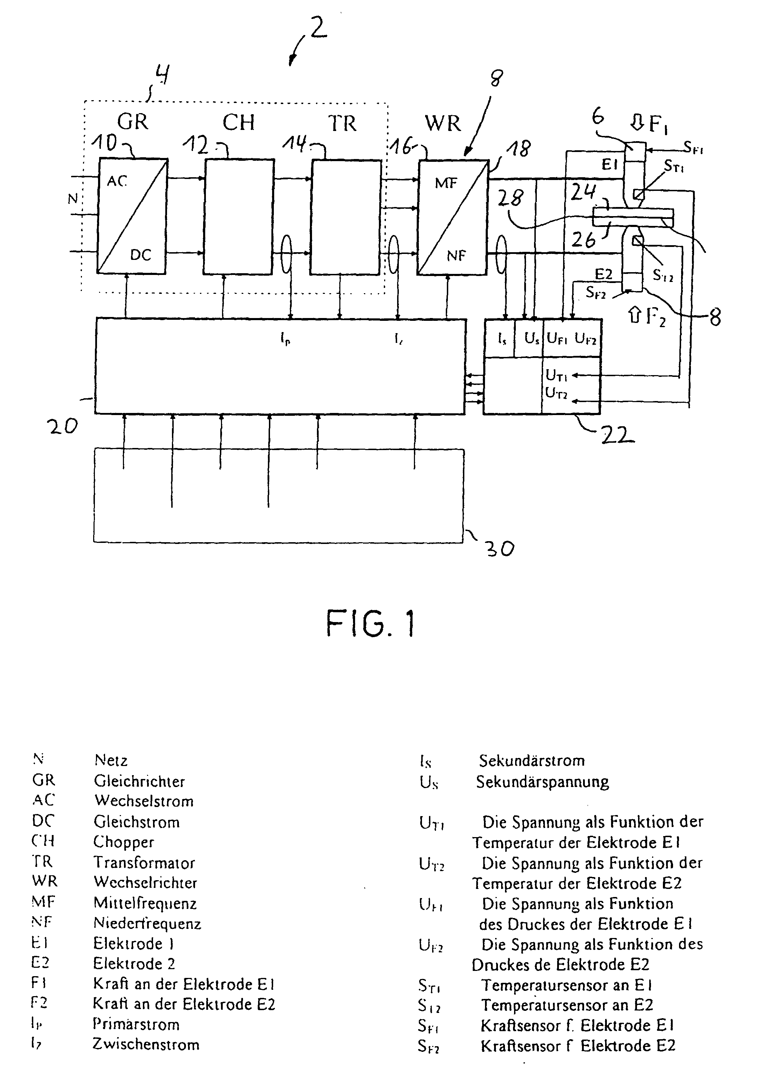

In Figur 1 ist ein Blockschaltbild einer erfindungsgemäßen Vorrichtung 2 zum Widerstandsschweißen zur Durchführung des erfindungsgemäßen Verfahrens dargestellt, die Spannungserzeugungsmittel 4 zur Erzeugung einer an Schweißelektroden 6, 8, die nachfolgend kurz als Elektroden bezeichnet werden, der Vorrichtung 2 anlegbare Gleichspannung aufweist. Ferner weist die Vorrichtung Wechselrichtermittel 8 zur Erzeugung eines Schweiß-Wechselstromes durch Umpolung der an den Schweißelektroden 6,8 anliegenden Gleichspannung auf.

Die Spannungserzeugungsmittel 4 weisen bei diesem Ausführungsbeispiel Gleichrichtermittel 10 zur Gleichrichtung einer bei dem Ausführungsbeispiel dreiphasigen Wechselspannung auf. Ferner weisen die Spannungserzeugungsmittel 4 Zerhackermittel 12 auf, die den Gleichrichtermitteln 10 nachgeordnet sind und die gleichgerichtete Wechselspannung in Impulse zerhacken, beispielsweise mit einer Frequenz von 50 KHz. Den Zerhackermitteln 12 ist ein Schweißtransformator 14 mit einer Mittelfrequenz von beispielsweise 1 - 100 kHz nachgeordnet. Da eine Übertragung niedriger Frequenzen durch Schweißtransformator 14 nicht erforderlich ist, kann dieser entsprechend klein und damit leicht ausgebildet sein.

Die Wechselrichtermittel 8 weisen einen Gleichrichter 16 auf, der die Sekundärspannung des Schweißtransformators 14 gleichrichtet und so eine an den Elektroden 6, 8 anliegende Gleichspannung erzeugt. Dem Gleichrichter 16 ist ein Wechselrichter 18 nachgeordnet, der zur Erzeugung eines Schweiß-Wechselstromes die an den Elektroden 6, 8 anliegende Gleichspannung umpolt.

Die erfindungsgemäße Vorrichtung 2 weist ferner Steuermittel 20 auf, die den Wechselrichter 18 der Wechselrichtermittel 8 derart ansteuern, daß dieser die an den Elektroden 6, 8 anliegende Gleichspannung während eines Schweißvorganges in Abhängigkeit von wenigstens einem während des Schweißvorganges gemessenen Parameter des Schweißprozesses umpolt. Meßmittel 22 dienen zur Messung von Parametern des Schweißprozesses, beispielsweise der Temperatur der Elektroden 6, 8 und/oder der Dicke von zu verschweißenden Werkstücken 24, 26, die in einer Kontaktebene 28 aneinander anliegen, und/oder der Kraft, mit der die Elektroden 6, 8 die zu verschweißenden Werkstücke 24, 26 kontaktieren und/oder dem Abnutzungsgrad der Elektroden 6, 8 und/oder eines zu Beginn des Schweißprozesses zwischen den Elektroden 6, 8 bestehenden elektrischen Widerstandes der zu verschweißenden Werkstücke 24, 26. Die Meßmittel können den Parameter oder die Parameter des Schweißprozesses vor Beginn und/oder während des Schweißprozesses messen.

Die Steuermittel 20 dienen der Steuerung des Schweißprozesses. Sie steuern oder regeln die Umpolung der Gleichspannung an den Elektroden 6, 8 und ggf. wenigstens eine Kenngröße des durch den Wechselrichter 18 erzeugten Schweiß-Wechselstromes in Abhängigkeit von den durch die Meßmittel 22 gemessenen Parametern während des Schweißprozesses.

Die durch die Steuermittel 20 beeinflußbaren Kenngrößen des Schweiß-Wechselstromes können beispielsweise das Verhältnis der Zeitdauer einer positiven Halbwelle zu der Zeitdauer einer negativen Halbwelle (Balance) und/oder einen zeitlichen Abstand zwischen einer positiven Halbwelle und einer negativen Halbwelle (Totzeit) und/oder die Kurvenform der positiven Halbwelle und/oder der negativen Halbwelle und/oder die Amplitude der postiven Halbwelle und/oder die Amplitude der negativen Halbwelle und/oder das Tastverhältnis des Schweiß-Wechselstromes umfassen.

Eine mit den Steuermitteln 20 verbundene Eingabeeinrichtung 30 dient zur externen Eingabe wenigstens eines Parameters des Schweißprozesses.

Das erfindungsgemäße Verfahren wird mit Hilfe der erfindungsgemäßen Vorrichtung 2 wie folgt durchgeführt:

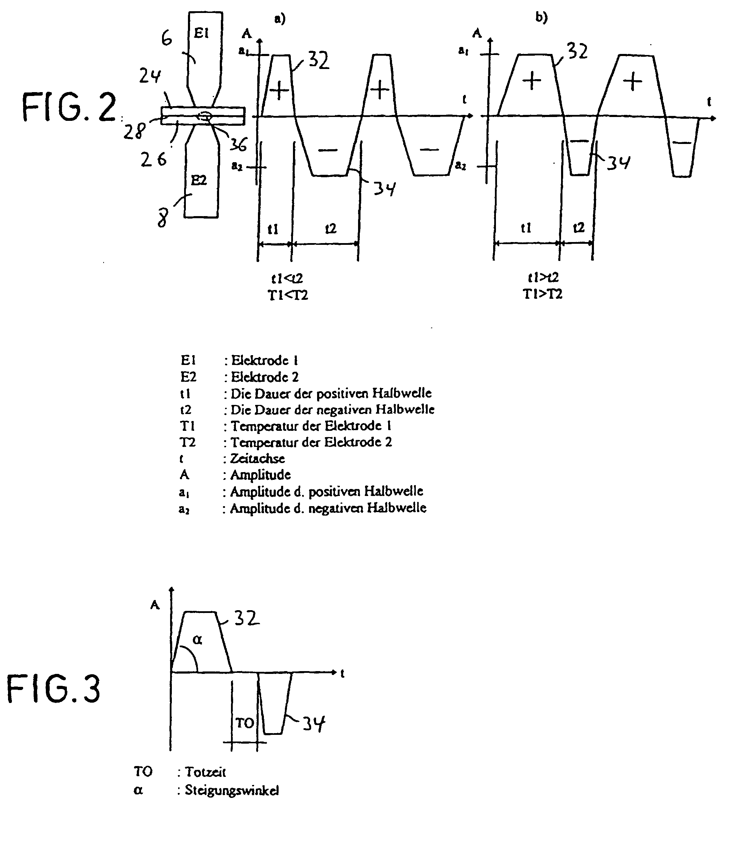

Eine von den Gleichrichtermitteln 10 gleichgerichtete Wechselspannung wird von den Zerhackermitteln 12 in Impulse zerhackt und von dem Schweißtransformator 14 transformiert. Der sekundärseitig an den Schweißtransformator angeschlossene Gleichrichter 16 erzeugt aus dem sekundärseitigen Ausgangssignal des Schweißtransformators 14 eine Gleichspannung, die an den Elektroden 6, 8 anliegt. Durch Umpolung der an den Elektroden 6, 8 anliegenden Gleichspannung erzeugt der Wechselrichter 18 einen Schweiß-Wechselstrom mit einer im wesentlichen rechteckigen Kurvenform (vgl. Fig. 2), wobei der Wechselrichter 18 durch die Steuermittel 20 derart angesteuert wird, daß die Umpolung in Abhängigkeit von dem gemessenen Parameter oder den gemessenen Parametern des Schweißprozesses erfolgt. Entsprechend den Anforderungen des jeweiligen Schweißprozesses steuern die Meßmittel 20 darüber hinaus ggf. die oben erwähnten Kenngrößen des Schweiß-Wechselstromes derart, daß der Schweiß-Wechselstrom eine gewünschte Kurvenform hat.

In Figur 2 ist links ein erstes Beispiel einer solchen Kurvenform dargestellt, bei der die Zeitdauer einer positiven Halbwelle kürzer ist als die Zeitdauer einer negativen Halbwelle, wobei die Halbwellen die gleiche Amplitude aufweisen und ohne zeitlichen Abstand (Totzeit) aufeinander folgen.

In Figur 2 ist rechts eine weitere Kurvenform dargestellt, die sich von der in Figur 2 links dargestellten Kurvenform dadurch unterscheidet, daß die Zeitdauer der positiven Halbwelle 32 größer ist als die Zeitdauer der negativen Halbwelle 34.

In Figur 3 ist ein drittes Beispiel einer Kurvenform dargestellt, die sich von der in Figur 2 rechts dargestellten Kurvenform dadurch unterscheidet, daß die positiven und negativen Halbwellen mit zeitlichem Abstand (Totzeit) aufeinander folgen.

Während des Schweißprozesses messen die Meßmittel 22 kontinuierlich oder in zeitlichen Abständen einen oder mehrere Parameter des Schweißprozesses, wobei die Steuermittel 20 die Kenngrößen des Schweiß-Wechselstromes in Abhängigkeit von den durch die Meßmittel 22 gemessenen Parametern sowie die Umpolung der Gleichspannung derart steuern bzw. regeln, daß sich an der Kontaktebene 28 zwischen den zu verschweißenden Werkstücken 24, 26 eine in Figur 2 bei dem Bezugszeichen 36 angedeutete Schweißlinse bildet, die wenigstens zu der Kontaktebene 28 symmetrisch ist.

Ist zunächst die Elektrode 6 positiv und die Elektrode 8 negativ gepolt und stellen die Steuermittel 20 fest, daß sich die positiv gepolte Elektrode 6 stärker erwärmt hat als die negativ gepolte Elektrode 8 und daß die Temperaturdifferenz zwischen den Elektroden 6, 8 einen vorbestimmten Wert überschritten hat, so steuern die Steuermittel 20 den Wechselrichter 18 derart an, daß dieser die Gleichspannung an den Elektroden 6, 8 umpolt. Infolgedessen ist nunmehr die zunächst negativ gepolte und damit kältere Elektrode 8 positiv gepolt und erwärmt sich stärker als die zunächst positiv und nunmehr negativ gepolte Elektrode 6, bis der Temperaturunterschied zwischen den Elektroden ausgeglichen ist.

Zusätzlich können die Steuermittel 20 ggf. noch die Kenngrößen des Schweiß-Wechselstromes steuern bzw. regeln. Stellen die Steuermittel 20 beispielsweise fest, daß sich bei der in Figur 2 links dargestellten Kurvenform eine der Elektroden 6, 8 stärker erwärmt hat, so kann beispielsweise auf die in Figur 2 rechts dargestellte Kurvenform umgeschaltet werden, so daß dann die wärmere der Elektroden 6, 8 nachfolgend mehr mit negativer Polarität und die kältere der Elektroden 6, 8 mehr mit positiver Polarität belastet wird, so daß sich die Temperatur beider Elektroden 6, 8 angleicht. Auf diese Weise bildet sich eine zu der Kontaktebene 28 symmetrische Schweißlinse und damit eine Schweißverbindung hoher Qualität zwischen den Werkstücken 24, 26. Außerdem ist eine gleichmäßige Abnutzung der Elektroden 6, 8 erzielt.

Das erfindungsgemäße Verfahren ermöglicht eine beliebige Steuerung der Lage der Schweißlinse 36 in Richtung senkrecht zu der Kontaktebene 28 durch entsprechende Steuerung der Temperatur der Elektroden 6, 8. Falls erwünscht, kann mit dem erfindungsgemäßen Verfahren somit auch eine zu der Kontaktebene 28 unsymmetrische Schweißlinse 36 gebildet werden.

Falls erforderlich können sämtliche der oben erwähnten Kenngrößen des Schweiß-Wechselstromes durch die Steuermittel 20 in der gewünschten Weise beeinflußt werden. Außerdem können beliebige geeignete Parameter des Schweißprozesses zur Beeinflussung dieser Kenngrößen herangezogen werden.

## Patentansprüche

1. Verfahren zum Widerstandsschweißen, insbesondere von Aluminiumblechen,
bei dem zur Erzeugung eines Schweiß-Wechselstromes eine an den Schweißelektroden anliegende Gleichspannung während des Schweißvorganges umgepolt wird,
**dadurch gekennzeichnet,**
**daß** während des Schweißvorganges wenigstens ein Parameter des Schweißprozesses gemessen wird und
**daß** der Zeitpunkt der Umpolung der Gleichspannung in Abhängigkeit von dem gemessenen Parameter oder wenigstens einem der gemessenen Paramter gewählt wird.

2. Verfahren nach Anspruch 1, **dadurch gekennzeichnet, daß** zur Beeinflussung der Bildung einer Schweißlinse an einer Kontaktebene zwischen zu verschweißenden Werkstücken und/oder zur Beeinflussung der Standzeit bzw. Standmenge der Schweißelektroden wenigstens eine Kenngröße des Schweiß-Wechselstromes in Abhängigkeit von wenigstens einem während des Schweißvorganges gemessenen Parameter des Schweißprozesses während des Schweißprozesses beeinflußt wird.

3. Verfahren nach Anspruch 1 oder 2, **dadurch gekenn** zeichnet, daß die Kenngrößen des Schweiß-Wechselstromes wenigstens
- das Verhältnis der Zeitdauer einer positiven Halbwelle zu der Zeitdauer einer negativen Halbwelle des Schweiß-Wechselstromes (Balance) und/oder
- einen zeitlichen Abstand zwischen einer positiven Halbwelle und einer negativen Halbwelle des Schweiß-Wechselstromes (Totzeit) und/oder
- die Kurvenform der positiven Halbwelle und/oder die Kurvenform der negativen Halbwelle des Schweiß-Wechselstromes und/oder
- die Amplitude der positiven Halbwelle und/oder die Amplitude der negativen Halbwelle des Schweiß-Wechselstromes und/oder
- das Tastverhältnis des Schweiß-Wechselstromes
umfassen.

4. Verfahren nach Anspruch 1, 2 oder 3, **dadurch gekennzeichnet, daß** die Parameter des Schweißprozesses wenigstens
- die Temperatur der Schweißelektroden und/oder
- die Dicke und/oder das Material der zu verschweißenden Werkstücke und/oder
- die Kraft, mit der die Schweißelektroden die zu verschweißenden Werkstücke kontaktieren, und/oder
- der Abnutzungsgrad der Schweißelektroden und/oder
- einen zu Beginn des Schweißprozesses zwischen den Schweißelektroden bestehenden elektrischen Widerstand der zu verschweissenden Werkstücke und/oder
- die Gesamtdauer der schweißzeit, während der seit einer vorangegangenen Umpolung der Gleichspannung mit unveränderter Polarität der Schweißelektroden geschweißt worden ist, und/oder
- die Anzahl der Schweißverbindungen, insbesondere Schweißpunkte oder Schweißnähte, die seit einer vorangegangenen Umpolung der Gleichspannung mit unveränderter Polarität erzeugt worden sind, und/oder
- das Verhältnis der Zeitdauer, während der eine Elektrode bei der Erzeugung einer Mehrzahl von Schweißverbindungen positiv gepolt war, zu der Zeitdauer, während der die Elektrode bei der Erzeugung der Mehrzahl von Schweißverbindungen negativ gepolt war,
umfassen.

5. Verfahren nach einem der Ansprüche 1 bis 4, **dadurch gekennzeichnet, daß** die Gleichspannung während eines Schweißvorganges wenigstens zweimal umgepolt wird.

6. Verfahren nach einem der vorhergehenden Ansprüche, **dadurch gekennzeichnet, daß** während des Schweißprozesses wenigstens ein Parameter des Schweißprozesses gemessen wird und daß in Abhängigkeit von dem gemessenen Parameter oder den gemessenen Parametern wenigstens eine Kenngröße des Schweiß-Wechselstromes gesteuert oder geregelt wird.

7. Verfahren nach einem der vorhergehenden Ansprüche, **dadurch gekennzeichnet, daß** die Kenngrößen des Schweiß-Wechselstromes in Abhängigkeit von wenigstens einem Parameter des Schweißprozesses derart gesteuert oder geregelt werden, daß sich an der Kontaktebene zwischen zu verschweißenden Werkstücken eine Schweißlinse bildet, die wenigstens zu dieser Kontaktebene im wesentlichen symmetrisch ist.

8. Verfahren nach einem der vorhergehenden Ansprüche, **dadurch gekennzeichnet, daß** die Anzahl der Umpolungen und/oder die Kenngrößen des Schweiß-Wechselstromes in Abhängigkeit von wenigstens einem Parameter des Schweißprozesses derart gesteuert wird bzw. werden, daß während einer Mehrzahl von Sehweißvorgängen oder während eines vorbestimmten Zeitintervalles die Summe der Schweißzeiten, während der eine Elektrode positiv gepolt ist, im wesentlichen gleich der Summe der Schweißzeiten ist, während derer die Elektrode negativ gepolt ist.

9. Verfahren nach Anspruch 6, **dadurch gekennzeichnet, daß** der Abnutzungsgrad der Schweißelektroden und/oder die Form der Schweißelektroden durch optische Mittel ermittelt wird.

10. Verfahren nach Anspruch 6, **dadurch gekennzeichnet, daß** die Temperatur der Schweißelektroden berührungslos gemessen wird, insbesondere mit Mitteln zur Messung von Infrarotstrahlung, beispielsweise einer Infrarotkamera.

11. Vorrichtung zum Widerstandsschweißen, insbesondere zur Durchführung des Verfahrens nach einem der Ansprüche 1 bis 10,
mit Spannungserzeugungsmitteln zur Erzeugung einer an Schweißelektroden der Vorrichtung anliegenden Gleichspannung und
mit Wechselrichtermitteln zur Erzeugung eines Schweiß-Wechselstromes durch Umpolung der an den Schweißelektroden anliegenden Gleichspannung während des Schweißvorganges,
**gekennzeichnet durch**
Meßmittel (22), die während des Schweißvorganges wenigstens einen Parameter des Schweißprozesses messen und
Steuermittel (20) , die mit den Meßmitteln (22) verbunden sind und die Wechselrichtermittel zur Umpolung der Gleichspannung in Abhängigkeit von dem gemessenen Parameter oder wenigstens einem der gemessenen Parameter ansteuern, derart, daß der Zeitpunkt der Umpolung der Gleichspannung in Abhängigkeit von dem gemessenen Parameter oder wenigstens einem der gemessenen Parameter gewählt wird.

12. Vorrichtung nach Anspruch 11, **dadurch gekennzeichnet, daß** die Spannungserzeugungemittel
- Gleichrichtermittel (10) zur Gleichrichtung einer Wechselspannung,
- Zerhackermittel (12), die den Gleichrichtermitteln (10) nachgeordnet sind und die gleichgerichtete Wechselspannung in Impulse zerhacken,
- einen Schweißtransformator (14), der den Zerhackermitteln (12) nachgeordnet ist und
- dem Schweißtransformator (14) nachgeordnete Gleichrichtermittel (16) zur Erzeugung einer an die Schweißelektroden (6, 8) anlegbaren Gleichspannung
aufweisen.

13. Vorrichtung nach Anspruch 11 oder 12, **dadurch gekennzeichnet, daß** die Wechselrichtermittel (18) mit den Schweißelektroden (6, 8) und über einen Gleichrichter (16) mit der Sekundärwicklung des Schweißtransformators (14) verbunden sind.

14. Vorrichtung nach einem der Ansprüche 11 bis 13, **dadurch gekennzeichnet, daß** die Wechselrichtermittel (18) Schaltermittel mit wenigstens zwei Schaltern aufweisen, die durch die Steuermittel ansteuerbar sind.

15. Vorrichtung nach einem der Ansprüche 11 bis 14, **dadurch gekennzeichnet, daß** die Steuermittel (20) wenigstens eine Kenngröße des Schweiß-Wechselstromes in Abhängigkeit von dem gemessenen Parameter oder wenigstens einem der gemessenen Parameter während des Schweißprozesses steuern oder regeln.

16. Vorrichtung nach Anspruch 15, **dadurch gekennzeichnet, daß** die Kenngrößen des Schweiß-Wechselstromes wenigstens
- das Verhältnis der Zeitdauer einer positiven Halbwelle (32) zu der Zeitdauer einer negativen Halbwelle (34) des Schweiß-Wechselstromes (Balance) und/oder
- ein zeitlicher Abstand zwischen einer positiven Halbwelle (32) und einer negativen Halbwelle (34) des Schweiß-Wechselstromes (Totzeit) und/oder
- die Kurvenform der positiven Halbwelle (32) und/oder der negativen Halbwelle (34) des Schweiß-Wechselstromes und/oder
- die Amplitude der positiven Halbwelle (32) und/oder die Amplitude der negativen Halbwelle (34) des Schweiß-Wechselstromes und/oder
- das Tastverhältnis des Schweiß-Wechselstromes
umfassen.

17. Vorrichtung nach einem der Ansprüche 11 bis 16, **dadurch gekennzeichnet, daß** die Parameter des Schweißprozesses wenigstens
- die Temperatur der Schweißelektroden (6, 8) und/oder
- die Dicke der zu verschweißenden Werkstücke (24, 26) und/oder
- die Kraft, mit der die Schweißelektroden (6, 8) die zu verschweißenden Werkstücke (24, 26) konktaktieren und/oder
- den Abnutzungsgrad der Schweißelektroden (6, 8) und/oder
- einen zu Beginn des Schweißprozesses zwischen den Schweißelektroden bestehenden elektrischen Widerstand der zu verschweißenden Werkstücke und/oder
- die Gesamtdauer der Schweißzeit, während der seit einer vorangegangenen Umpolung der Gleichspannung mit unveränderter Polarität der Schweißelektroden (6, 8) geschweißt worden ist, und/oder
- die Anzahl der Schweißverbindungen, insbesondere Schweißpunkte oder Schweißnähte, die seit einer vorangegangenen Umpolung der Gleichspannung mit unveränderter Polarität erzeugt worden sind, und/oder
- das Verhältnis der Zeitdauer, während der eine Elektrode bei der Erzeugung einer Mehrzahl von Schweißverbindungen positiv gepolt war, zu der Zeitdauer, während der die Elektrode bei der Erzeugung der Mehrzahl von Schweißverbindungen negativ gepolt war,
umfassen.

18. Vorrichtung nach einem der Ansprüche 11 bis 17, **dadurch gekennzeichnet, daß** die Steuermittel (20) wenigstens eine Kenngröße des Schweiß-Wechselstromes in Abhängigkeit von Parametern des Schweißprozesses derart einstellen oder steuern oder regeln, daß sich an einer Kontaktebene zwischen zu verschweißenden Werkstücken (24, 26) eine Schweißlinse (36) bildet, die wenigstens zu dieser Kontaktebene im wesentlichen symmetrisch ist.

19. Vorrichtung nach einem der Ansprüche 11 bis 18, **gekennzeichnet durch** eine mit den Steuermitteln (20) verbundene Eingabeeinrichtung (30) zur externen Eingabe wenigstens eines Parameters des Schweißprozesses.

## Claims

1. A resistance welding process, in particular for aluminium sheets,
in which to produce an AC welding current a DC voltage at the welding electrodes is subject to pole reversal during the welding operation,
**characterised in that** during the welding operation at least one parameter of the welding process is measured
and **in that** the instant of the pole reversal of the DC voltage is chosen in dependence on the measured parameter or at least one of the measured parameters.

2. A process according to Claim 1,
**characterised in that** to influence the formation of a button at a contact plane between workpieces to be welded and/or to influence the service life or tool life of the welding electrodes at least one characteristic quantity of the AC welding current is influenced during the welding process in dependence on at least one parameter of the welding process that is measured during the welding operation.

3. A process according to Claim 1 or 2,
**characterised in that** the characteristic quantities of the AC welding current comprise at least
- the ratio of the duration of a positive half wave to the duration of a negative half wave of the AC welding current (balance) and/or
- a time interval between a positive half wave and a negative half wave of the AC welding current (dead time) and/or
- the curve form of the positive half wave and/or the curve form of the negative half wave of the AC welding current and/or
- the amplitude of the positive half wave and/or the amplitude of the negative half wave of the AC welding current and/or
- the pulse duty ratio of the AC welding current.

4. A process according to Claim 1, 2 or 3,
**characterised in that** the parameters of the welding process comprise at least
- the temperature of the welding electrodes and/or
- the thickness and/or the material of the workpieces to be welded and/or
- the force with which the welding electrodes contact the workpieces to be welded and/or
- the degree of wear to the welding electrodes and/or
- an electrical resistance of the workpieces to be welded which exists between the welding electrodes at the start of the welding process and/or
- the total duration of the welding period, during which welding has been carried out since a preceding pole reversal of the DC voltage with unchanged polarity of the welding electrodes, and/or
- the number of welding joints, in particular welding spots or weld seams, which have been produced since a preceding pole reversal of the DC voltage with unchanged polarity, and/or
- the ratio of the period of time during which an electrode was positively polarised during the production of a plurality of welding connection, to the period of time during which the electrode was negatively polarised during the production of the plurality of welding connections.

5. A process according to one of Claims 1 to 4,
**characterised in that** the DC voltage is subject to pole reversal at least twice during a welding operation.

6. A process according to one of the preceding Claims,
**characterised in that** during the welding process at least one parameter of the welding process is measured and **in that** at least one characteristic quantity of the AC welding current is controlled or regulated in dependence on the measured parameter or parameters.

7. A process according to one of the preceding Claims,
**characterised in that** the characteristic quantities of the AC welding current are controlled or regulated as a function of at least one parameter of the welding process in such a manner that a button, which is at least substantially symmetrical to this contact plane, is formed at the contact plane between workpieces to be welded.

8. A process according to one of the preceding Claims,
**characterised in that** the number of pole reversals and/or the characteristic quantities of the AC welding current is or are controlled in dependence on at least one parameter of the welding process in such a manner that during a plurality of welding operations or during a predetermined time interval the sum of the welding periods during which an electrode is positively polarised is substantially equal to the sum of the welding periods during which the electrode is negatively polarised.

9. A process according to Claim 6,
**characterised in that** the degree of wear of the welding electrodes and/or the shape of the welding electrodes is determined by optical means.

10. A process according to Claim 6,
**characterised in that** the temperature of the welding electrodes is measured without contact, in particular with means for the measurement of infrared radiation, for example an infrared camera.

11. An apparatus for resistance welding, in particular for performing the process according to one of Claims 1 to 10,
having voltage generation means for generating a DC voltage lying at welding electrodes of the apparatus and
having inverter means for generating an AC welding current by pole reversal of the DC voltage lying at the welding electrodes during the welding operation,
**characterised by**
measurement means (22) which measure at least one parameter of the welding process during the welding operation and
control means (20), which are connected to the measurement means (22) and control the inverter means for the pole reversal of the DC voltage in dependence on the measured parameters or at least one of the measured parameters in such a manner that the instant of the pole reversal of the DC voltage is chosen in dependence on the measured parameters or at least one of the measured parameters.

12. An apparatus according to Claim 11,
**characterised in that** the voltage generation means comprise
- rectifier means (10) for the rectification of an AC voltage,
- chopper means (12), which are disposed after the rectifier means (10) and chop the rectified AC voltage into pulses,
- a welding transformer (14), which is situated after the chopper means (12) and
- rectifier means (16) situated after the welding transformer (14) to generate a DC voltage which can be applied to the welding electrodes (6, 9).

13. An apparatus according to Claim 11 or 12,
**characterised in that** the inverter means (18) are connected to the welding electrodes (6, 8) and via a rectifier (16) to the secondary welding of the welding transformer (14).

14. An apparatus according to one of Claims 11 to 13,
**characterised in that** the inverter means (18) comprise switch means having at least two switches which can be controlled y the control means.

15. An apparatus according to one of Claims 11 to 14,
**characterised in that** the control means (20) control or regulate at least one characteristic quantity of the AC welding current in dependence on the measured parameter or at least one of the measured parameters during the welding process.

16. An apparatus according to Claim 15,
**characterised in that** the characteristic quantities of the AC welding current comprise at least
- the ratio of the duration of a positive half wave (32) to the duration of a negative half wave (34) of the AC alternating current (balance) and/or
- a time interval between a positive half wave (32) and a negative half wave (34) of the AC welding current (dead time) and/or
- the curve shape of the positive half wave (32) and/or of the negative half wave (34) of the AC welding current and/or
- the amplitude of the positive half wave (32) and/or the amplitude of the negative half wave (34) of the AC welding current and/or
- the pulse duty ratio of the AC welding current.

17. An apparatus according to one of Claims 11 to 16,
**characterised in that** the parameters of the welding process comprise at least
- the temperature of the welding electrodes (6, 8) and/or
- the thickness of the workpieces (24, 26) to be welded and/or
- the force with which the welding electrodes (6, 8) contact the workpieces (24, 26) to be welded and/or
- the degree of wear to the welding electrodes (6, 8) and/or
- an electrical resistance of the workpieces to be welded that exists between the welding electrodes at the start of the welding process and/or
- the total duration of the welding period during which welding has been carried out since a preceding pole reversal of the DC voltage with unchanged polarity of the welding electrodes (6, 8), and/or
- the number of welding joints, in particular welding spots or welding seams, which have been produced since a preceding pole reversal of the DC voltage with unchanged polarity, and/or
- the ratio of the period of time during which an electrode was positively polarised during the generation of a plurality of welding connections to the period of time during which the electrode was negatively polarised.

18. An apparatus according to one of Claims 11 to 17,
**characterised in that** the control means (20) comprise at least one characteristic quantity of the welding AC current in dependence on parameters of the welding process in such a manner that a button (36), which is at least substantially symmetrical to this contact plane, is formed at a contact plane between workpieces (24, 26) to be welded.

19. An apparatus according to one of Claims 11 to 18,
**characterised by** an input device (30) connected to the control means (20) for the external input of at least one parameter of the welding process.

## Revendications

1. Procédé de soudage électrique par résistance, en particulier de tôles d'aluminium,
dans lequel, pour créer un courant alternatif de soudage, une tension continue se trouvant sur les électrodes de soudage est inversée pendant le déroulement de soudage,
**caractérisé en ce que**, pendant le déroulement du soudage, au moins un paramètre du processus de soudage est mesuré et
**en ce que** le moment d'inversion de la tension continue est choisi en fonction des paramètres mesurés ou d'au moins un des paramètres mesurés.

2. Procédé selon la revendication 1,
**caractérisé en ce que**, pour influencer la formation d'un point de soudage sur un plan de contact entre des pièces à souder et/ou pour influencer la durée de vie ou respectivement la consommation des électrodes de soudage, au moins une grandeur caractéristique du courant alternatif de soudage est influencée pendant le processus de soudage en fonction d'au moins un paramètre du processus de soudage mesuré pendant le déroulement du soudage.

3. Procédé selon la revendication 1 ou 2,
**caractérisé en ce que** les grandeurs caractéristiques du courant alternatif de soudage comprennent au moins
- le rapport de la durée d'une demi-onde positive à la durée d'une demi-onde négative du courant alternatif de soudage (balance) et/ou
- un intervalle de temps entre une demi-onde positive et une demi-onde négative du courant alternatif de soudage (temps mort) et/ou
- l'allure de la demi-onde positive et/ou l'allure de la demi-onde négative du courant alternatif de soudage et/ou
- l'amplitude de la demi-onde positive et/ou l'amplitude de la demi-onde négative du courant alternatif de soudage et/ou
- le rapport cyclique du courant alternatif de soudage.

4. Procédé selon la revendication 1, 2 ou 3,
**caractérisé en ce que** les paramètres du processus de soudage comprennent au moins :
- la température des électrodes de soudages et/ou
- l'épaisseur et/ou le matériau des pièces à souder et/ou
- la force, avec laquelle les électrodes de soudage entrent en contact avec les pièces à souder et/ou
- le degré d'usure des électrodes de soudage et/ou
- une résistance électrique des pièces à souder se trouvant entre les électrodes de soudage au début du processus de soudage et/ou
- la durée totale du temps de soudage, pendant laquelle on doit souder, depuis une inversion antérieure de la tension continue avec une polarité inchangée des électrodes de soudage et/ou
- le nombre de liaisons de soudage, en particulier de points de soudage ou de soudures, qui doivent être créées depuis une inversion antérieure de la tension continue avec une polarité inchangée et/ou
- le rapport de la durée pendant laquelle une électrode est polarisée positivement pour la création d'une pluralité de liaisons de soudage, à la durée pendant laquelle l'électrode est polarisée négativement pour créer la pluralité de liaisons de soudage.

5. Procédé selon l'une des revendications 1 à 4,
**caractérisé en ce que** la tension continue est inversée au moins deux fois pendant un déroulement du soudage.

6. Procédé selon l'une quelconque des revendications précédentes,
**caractérisé en ce que**, pendant le processus de soudage, au moins un paramètre du processùs de soudage est mesuré, et **en ce que**, en fonction du paramètre mesuré ou des paramètres mesurés au moins une grandeur caractéristique du courant alternatif de soudage est commandée ou réglée.

7. Procédé selon l'une quelconque des revendications précédentes,
**caractérisé en ce que** les grandeurs caractéristiques du courant alternatif de soudage sont commandés ou réglés en fonction d'au moins un paramètre du processus de soudage de telle sorte que, sur le plan de contact entre les pièces à souder, un point de soudage est formé, qui est sensiblement symétrique au moins par rapport à ce plan de contact.

8. Procédé selon l'une des revendications précédentes,
**caractérisé en ce que** le nombre des inversions et/ou les grandeurs caractéristiques du courant alternatif de soudage est ou sont commandés en fonction d'au moins un paramètre du processus de soudage de telle sorte que, pendant une pluralité de déroulements d'opérations de soudage ou pendant un intervalle de temps prédéterminé, la somme des temps de soudage, pendant lesquels une électrode est polarisée de manière positive , est sensiblement identique à la somme des temps de soudage pendant lesquels l'électrode est polarisée de manière négative.

9. Procédé selon la revendication 6,
**caractérisé en ce que** le degré d'usure des électrodes de soudage et/ou la forme des électrodes de soudage est déterminé(e) par des moyens optiques.

10. Procédé selon la revendication 6,
**caractérisé en ce que** la température des électrodes de soudage est mesurée sans contact, en particulier avec des moyens de mesure par rayonnement infrarouge, par exemple une caméra infrarouge.

11. Dispositif pour un soudage électrique par résistance, en particulier pour mettre en oeuvre le procédé selon l'une des revendications 1 à 10,
avec des moyens générateurs d'une tension pour créer une tension continue sur les électrodes de soudage du dispositif et
avec des moyens convertisseurs pour créer un courant alternatif de soudage par inversion de la tension continue sur les électrodes de soudage pendant le déroulement du soudage,
**caractérisé par**
des moyens de mesure (22) qui mesurent, pendant le déroulement du soudage, au moins un paramètre du processus de soudage et
des moyens de commande (20), qui sont reliés aux moyens de mesure (22) et commandent les moyens convertisseurs pour inverser la tension continue en fonction du paramètre mesuré ou d'au moins un des paramètres mesurés de telle sorte que le moment de l'inversion de la tension continue est choisi en fonction du paramètre mesuré ou d'au moins un des paramètres mesurés.

12. Dispositif selon la revendication 11,
**caractérisé en ce que** les moyens générateurs de tension comportent :
- des moyens redresseurs (10) pour redresser une tension alternative,
- des moyens hacheurs (12) qui sont disposés après les moyens redresseurs (10) et qui hachent en impulsions la tension alternative redressée,
- un transformateur de soudage (14), qui est disposé après les moyens hacheurs ( 12), et
- des moyens redresseurs (16) disposés après le transformateur de soudage (14) pour créer une tension continue pouvant être appliquée sur les électrodes de soudage (6, 8).

13. Dispositif selon la revendication 11 ou 12,
**caractérisé en ce que** les moyens convertisseurs (18) sont reliés aux électrodes de soudage (6, 8) et par l'intermédiaire d'un redresseur (16) avec l'enroulement secondaire du transformateur de soudage (14).

14. Dispositif selon l'une des revendications 11 à 13,
**caractérisé en ce que** les moyens convertisseurs (18) présentent des moyens de commutation avec au moins deux commutateurs qui peuvent être commandés par les moyens de commande.

15. Dispositif selon l'une des revendications 11 à 14,
**caractérisé en ce que** les moyens de commande (20) commandent ou règlent au moins une grandeur caractéristique du courant alternatif de soudage en fonction du paramètre mesuré ou d'au moins un des paramètres mesurés pendant le processus de soudage.

16. Dispositif selon la revendication 15,
**caractérisé en ce que** les grandeurs caractéristiques du courant alternatif de soudage comprennent au moins :
- le rapport de la durée d'une demi-onde positive (32) à la durée d'une demi-onde négative (34) du courant alternatif de soudage (balance) et/ou
- un intervalle de temps entre une demi-onde positive (32) et une demi-onde négative (34) du courant alternatif de soudage (temps mort) et/ou
- l'allure de la demi-onde positive (32) et/ou l'allure de la demi-onde négative (34) du courant alternatif de soudage et/ou
- l'amplitude de la demi-onde positive (32) et/ou l'amplitude de la demi-onde négative (34) du courant alternatif de soudage et/ou
- le rapport cyclique du courant alternatif de soudage.

17. Dispositif selon l'une des revendications 11 à 16,
**caractérisé en ce que** les paramètres du processus de soudage comprennent au moins :
- la température des électrodes de soudages (6, 8) et/ou
- l'épaisseur des pièces (24, 26) à souder et/ou
- la force, avec laquelle les électrodes de soudage (6, 8) entrent en contact avec les pièces (24, 26) à souder et/ou
- le degré d'usure des électrodes de soudage (6, 8) et/ou
- une résistance électrique des pièces à souder, se trouvant au début du processus de soudage, entre les électrodes de soudage et/ou
- la durée totale du temps de soudage, pendant laquelle on doit souder, depuis une inversion antérieure de la tension continue avec une polarité inchangée des électrodes de soudage (6, 8) et/ou
- le nombre de liaisons de soudage, en particulier de points de soudage ou de soudures, qui doivent être créées depuis d'une inversion antérieure de la tension continue avec une polarité inchangée et/ou
- le rapport de la durée pendant laquelle une électrode est polarisée positivement pour la création d'une pluralité de liaisons de soudage, à la durée pendant laquelle l'électrode est polarisée négativement pour créer la pluralité de liaisons de soudage.

18. Dispositif selon l'une des revendications 11 à 17,
**caractérisé en ce que** les moyens de commande (20) ajustent ou commandent ou règlent au moins une grandeur caractéristique du courant alternatif de soudage en fonction des paramètres du processus de soudage de telle sorte que, sur un plan de contact entre des pièces (24, 26) à souder, se forme un point de soudage (36) qui est sensiblement symétrique par rapport à ce plan de contact.

19. Dispositif selon l'une des revendications 11 à 18,
**caractérisé par** un dispositif d'entrée (30) relié aux moyens de commande (20) pour l'entrée externe d'au moins un paramètre du processus de soudage.
